# EUROPÄISCHE PATENTSCHRIFT

(11) **EP 2 981 730 B1**
(45) Veröffentlichungstag und Bekanntmachung des Hinweises auf die Patenterteilung: **24.10.2018**
(21) Anmeldenummer: 14715845.5
(22) Anmeldetag: 04.04.2014
(51) Int. Cl.: F16D 65/18, F16D 65/56

(54) **VERSCHLEISSNACHSTELLVORRICHTUNG EINER SCHEIBENBREMSE, UND EINE ENTSPRECHENDE SCHEIBENBREMSE**
WEAR ADJUSTMENT DEVICE FOR A DISC BRAKE, AND CORRESPONDING DISK BRAKE
DISPOSITIF DE RATTRAPAGE D'USURE D'UN FREIN À DISQUE, ET FREIN À DISQUE CORRESPONDANT

(30) Priorität: 04.04.2013 DE 102013103346
(43) Veröffentlichungstag der Anmeldung: 10.02.2016
(73) Patentinhaber: KNORR-BREMSE Systeme für Nutzfahrzeuge GmbH, 80809 München (DE)
(72) Erfinder: BAUMGARTNER, Johann, 85368 Moosburg (DE); TRIMPE, Robert, 82234 Wessling (DE)
(86) Internationale Anmeldenummer: PCT/EP2014/000910
(87) Internationale Veröffentlichungsnummer: WO 2014/161672

(56) Entgegenhaltungen:
- EP-A1- 2 685 124
- EP-A2- 2 535 614

## Beschreibung

Die Erfindung betrifft eine Verschleißnachstellvorrichtung einer Scheibenbremse, insbesondere für ein Kraftfahrzeug, nach dem Oberbegriff des Anspruchs 1. Die Erfindung bezieht sich auf eine entsprechende Scheibenbremse.

Fahrzeuge und bestimmte technische Geräte verwenden häufig Reibungsbremsen, um kinetische Energie umzuwandeln. Bevorzugt wird dabei speziell eine mit Druckluft betätigte Scheibenbremse für hohe Leistungsanforderungen, die üblicherweise mit zwei Druckstempeln (auch als Druckspindel bezeichnet) ausgerüstet sind. Die Druckstempel weisen eine gemeinsame Betätigungs- und Verschleißnachstellvorrichtung auf.

Bei der typischen Bauform einer Scheibenbremse besteht diese aus einem Bremssattel samt innerer Mechanik, aus in der Regel zwei Bremsbelägen und der Bremsscheibe. Auf die innere Mechanik werden über einen pneumatisch betätigten Zylinder die Zylinderkräfte eingeleitet, durch einen Exzentermechanismus verstärkt und als Zuspannkraft über Gewindespindeln auf Bremsbeläge und Bremsscheibe übertragen, wobei über die Gewindespindeln der Verschleiß von Bremsscheibe und Bremsbelägen ausgeglichen wird.

Die Zuspannkräfte wirken über beide Bremsbeläge auf die Bremsscheibe, welche in Abhängigkeit von der Höhe der Zuspannkraft eine Verzögerung der Rotationsbewegung erfährt. Diese Verzögerung wird maßgeblich vom Reibwert zwischen Bremsscheibe und Bremsbelag mitbestimmt. Da die Beläge konstruktiv als Verschleißteile ausgelegt werden und die Reibwerte abhängig von der Festigkeit sind, sind diese generell weicher als die Bremsscheibe, d.h. die Beläge erfahren über Ihre Gebrauchsdauer eine Änderung der Belagstärke, sie verschleißen. Aus dieser Belagstärkenänderung ergibt sich die Notwendigkeit, dass eine Verschleißnachstellung mittels der Verschleißnachstellvorrichtung ausgeglichen und somit ein konstantes Luftspiel eingestellt wird. Ein konstantes Luftspiel wird benötigt, um die Ansprechzeiten der Bremse klein zuhalten, die Freigängigkeit der Bremsscheibe zu gewährleisten und eine Hubreserve für Grenzbelastungsfälle vorzuhalten.

Ein Beispiel einer Verschleißnachstellvorrichtung beschreibt das Dokument DE 10 2004 037 771 A1.

Für eine Justierung der beiden längenveränderlichen Druckstempel durch die gemeinsame Verschleißnachstellvorrichtung ist ein Synchronisationsgetriebe bzw. eine Synchronisationseinrichtung erforderlich, wodurch eine gleichmäßig Zustellbewegung beider Druckstempel bewirkt wird, um ungleichen Verschleiß der Bremsbeläge zu vermeiden.

Es sind Bremsenkonstruktionen mit außen liegender und innen liegender Synchronisationseinrichtung bekannt. Ein Beispiel zur Illustration einer außen liegenden Synchronisationseinrichtung beschreibt DE 40 32 886. Eine innen liegende Synchronisation gibt z.B. DE 92 08 699 U1 an.

Bei der außen liegenden Synchronisation ist das Synchronisationsgetriebe außerhalb des Bremssattelgehäuses (auch Bremsengehäuse genannt) auf der von der Bremsscheibe abgewandten Seite desselben unter einer speziellen Abdeckung angeordnet. Dies vereinfacht einerseits die Einstellung bei der Montage und eine notwendige Wartung, verursacht aber andererseits durch die notwendige Abdeckung und Abdichtung zusätzliche Kosten. Die außen liegende Synchronisation ist üblicherweise als Umschlingungsgetriebe in Form eines Rollen-Gliederkettentriebes ausgeführt. Neben den erwähnten Vorteilen für Montage und Wartung ergibt sich ein Nachteil durch das relativ große Kettenspiel und eventuell dadurch hervorgerufene Synchronisationstoleranzen. Im Fall von Zahnradgetrieben als Synchronisation können große Druckstempelabstände und dem, infolge des Platzbedarfs des direkt am Sattelgehäuse befestigten Bremszylinders, geringen für die Zahnräder zur Verfügung stehenden radialen Bauraums eine größere Anzahl von Zahnrädern mit kleinem Durchmesser bedingen, was in der Summe ebenfalls ein relativ großes Zahnspiel verursachen kann.

Bei Bremsenbauarten ohne Traverse und mit direkter Spindelbetätigung hat sich dagegen die innen liegende Synchronisation mittels Zahnrädern durchgesetzt. Aufgrund der günstigeren Platzverhältnisse kann hierbei nur ein Zwischenzahnrad erforderlich sein. Diese Zahnräder sind üblicherweise unterhalb der Betätigungseinheit an der, der Bremsscheibe zugewandten Seite im Innenraum des Bremssattelgehäuses angeordnet. Hierbei wird der Aufwand für eine zusätzliche Abdeckung und Abdichtung gespart, jedoch kann sich die Einstellung bei Montage und Service schwieriger gestalten. Zudem sind bei einer solchen Anordnung zweiteilige, längenveränderliche Druckstempel.

Eine gattungsgemäße Verschleißnachstellvorrichtung geht z.B. aus EP-A-2 535 614 hervor.

Die Aufgabe der vorliegenden Erfindung besteht daher darin, eine verbesserte Verschleißnachstellvorrichtung zu schaffen.
Eine weitere Aufgabe ist, eine verbesserte Scheibenbremse bereitzustellen.
Die Aufgabe wird durch eine Verschleißnachstellvorrichtung mit den Merkmalen des Anspruchs 1, und eine Scheibenbremse mit den Merkmalen des Anspruchs 7 gelöst.
Es wird eine Verschleißnachstellvorrichtung bereitgestellt, welche ein Synchronmittel, Synchronräder und ein Trägerelement umfasst.
Eine Scheibenbremse wird geschaffen, welche die Verschleißnachstellvorrichtung mit einer innen liegenden Synchronisationseinrichtung aufweist.
Eine erfindungsgemäße Verschleißnachstellvorrichtung zur Nachstellung eines Reibflächenverschleißes an Bremsbelag und Bremsscheibe einer Scheibenbremse, insbesondere für ein Kraftfahrzeug, mit einer Zuspannvorrichtung, vorzugsweise mit einem Bremshebel, deren Exzenterlagerung an der Traverse angeordnet ist, wobei die Verschleißnachstellvorrichtung antriebsseitig mit der Zuspannvorrichtung, vorzugsweise mit dem Bremshebel, und abtriebsseitig mit einer von mindestens zwei Spindeleinheiten der Scheibenbremse koppelbar ist, umfasst:
a) einen Nachsteller, der mit der einen der mindestens zwei Spindeleinheiten koppelbar ist; b) einen Mitnehmer, der mit der anderen der mindestens zwei Spindeleinheiten koppelbar ist; und c) eine Synchronisationseinrichtung zur Übertragung von Drehbewegungen zwischen Nachsteller und Mitnehmer. Die Synchronisationseinrichtung umfasst mindestens ein Synchronmittel, Synchronräder und ein Trägerelement, wobei die Synchronräder mit dem Synchronmittel in Zusammenwirkung stehen und jeweils mit dem Nachsteller und dem Mitnehmer gekoppelt sind.
Es ergibt sich somit der Vorteil eines kompakten Aufbaus für druckluftbetätigte Scheibenbremsen mit zwei einteiligen Druckspindeln und Traversenbetätigung.
Eine erfindungsgemäße Scheibenbremse, vorzugsweise druckluftbetätigt, insbesondere für ein Kraftfahrzeug, mit einem Bremsengehäuse, einer Zuspannvorrichtung, vorzugsweise mit einem Bremshebel, deren Exzenterlagerung an der Traverse angeordnet ist, mindestens zwei Spindeleinheiten, und mindestens einer Verschleißnachstellvorrichtung, welche mit der Zuspannvorrichtung, vorzugsweise mit dem Bremshebel, gekoppelt ist, weist die obige Verschleißnachstellvorrichtung auf. Die Synchronisationseinrichtung der Verschleißnachstellvorrichtung ist innen liegend innerhalb des Bremsengehäuses angeordnet.
Die Synchronisationseinrichtung weist ein Umschlingungsgetriebe auf, wobei das Synchronmittel ein Zugmittel und insbesondere vorteilhaft eine Rollen-Gliederkette ist, welche problemlos anwendbar ist.
Es zeigt sich überraschend, dass bei einer geeigneten Anordnung von Last- und Leertrum des Synchronmittels bzw. der Rollen-Gliederkette oder eines Zahnriemens der Platzbedarf des Umschlingungsgetriebes der innen liegend angeordneten Synchronisationseinrichtung deutlich geringer ist als der eines Zahnradgetriebes.
Dazu ist vorgesehen, dass das Trägerelement einen Führungskanal zur Führung des Synchronmittels aufweist. Somit werden Last- und Leertrum in dem Trägerelement als Trägerbauteil, z.B. aus Blech oder/und Kunststoff auf der Seite des gespannten Lasttrums in geringem Abstand voneinander mittels des Führungskanals geführt.

Der Führungskanal weist eine Bodenfläche mit seitlichen Führungsabschnitten auf, wobei die Führungsabschnitte von der Bodenfläche des Führungskanals hervorstehen. Der eine Führungsabschnitt der Führungsabschnitte ist wellenförmig ausgebildet. Die Wellenform des Führungsabschnitts bietet den Vorteil, bei geringem Bauraum einen größtmöglichen durch Toleranz bedingten Längenunterschied der Rollen-Gliederkette auszugleichen.
Das Leertrum wird hinter dem antreibenden und vor dem angetriebenen Ketten- oder Zahnriemenrad bzw. Synchronrad durch das Trägerelement in dieser Bahn des Führungskanals geführt.

Der andere Führungsabschnitt der Führungsabschnitte ist mit einer Vorspannfeder versehen, welche einen Leertrum des Synchronmittels gegen den einen Führungsabschnitt drückt.

Die Vorspannfeder weist gebogene Endbereiche zur Führung des Leertrums des Synchronmittels unter Vorspannung in den Führungskanal auf. Diese Endbereiche können z.B. in etwa viertelkreisförmig gebogen sein und Umlenkbereiche bilden. Außerdem können diese Endbereiche als Spannelemente und/oder gebogene Blattfederarme ausgebildet sein, was z.B. bei einer Rollen-Gliederkette von Vorteil ist.

In einer Ausführung weist das Trägerelement an jedem Ende des Führungskanals eine Aufnahmelagerung zur jeweiligen Lagerung des Nachstellers und des Mitnehmers auf. Damit ist der Aufbau einer platzsparenden, kompakten Verschleißnachstellvorrichtung ermöglicht.
In einer anderen Ausführung weist das Trägerelement eine Klemmlasche auf, welche zur Festlegung des Trägerelementes zwischen einer Lagerwalze und einem Abstütznocken eines Bremsengehäuses der zuzuordnenden Scheibenbremse vorgesehen ist. So ist vorteilhaft eine einfache Anordnung durch einen Klemmvorgang innerhalb des Bremsengehäuses möglich.
In einer alternativen Ausführung weist das Trägerelement an den Seiten der Aufnahmelagerungen jeweils mindestens eine seitlich hervorstehende Rastnase zur Festlegung in Rastnuten, die in ein Bremsengehäuse der zuzuordnenden Scheibenbremse eingeformt sind, auf. So kann die Verschleißnachstellvorrichtung mit ihrem Trägerelement in dem Bremsengehäuse auf einfache Art und Weise eingepresst und gesichert gehalten werden.
In einer weiteren Ausführung sind der Nachsteller und der Mitnehmer in Hohlräume von Druckspindeln einsteckbar oder auf Druckspindeln der zuzuordnenden Scheibenbremse aufsetzbar ausgebildet, was eine einfache Montage ermöglicht.
Ein besonderer Vorteil ist es, dass die Verschleißnachstellvorrichtung als vormontierte Baugruppe ausgebildet ist, wobei sie an einem separaten Ort vormontierbar und prüfbar ist.

In einer Ausführung ist die Scheibenbremse so ausgebildet, dass die Verschleißnachstellvorrichtung mittels des Trägerelementes zwischen der Zuspannvorrichtung, vorzugsweise dem Bremshebel, einer Lagerwalze und einem Abstütznocken des Bremsengehäuses klemmend gehalten ist. Dies ermöglicht eine einfache Montage.

In einer alternativen Ausführung der Scheibenbremse ist die Verschleißnachstellvorrichtung mittels des Trägerelementes in passgenauen Aufnahmen des Bremsengehäuses durch Einpressen in dem Bremsengehäuse gehalten und mittels Rastnasen in Rastnuten des Bremsengehäuses in dem Bremsengehäuse gesichert. Auch dies ermöglicht eine einfache Montage und einen sicheren Sitz innerhalb des Bremsengehäuses.

Somit ist ein Bremsenkonzept für druckluftbetätigte Scheibenbremsen mit zwei einteiligen Druckstempeln bzw. Druckspindeln und Traversenbetätigung geschaffen, bei welchem eine innen im Bremsengehäuse angeordnete Synchronisationseinrichtung der Verschleißnachstellvorrichtung mit einem Umschlingungsgetriebe, insbesondere einer Rollen-Gliederkette, problemlos anwendbar ist.

Die Erfindung wird nun anhand beispielhafter Ausführungen mit Bezug auf die beigefügten Zeichnungen näher erläutert. Hierbei zeigen:
- Fig. 1: eine schematische Teilschnittansicht einer üblichen Scheibenbremse;
- Fig. 2-3: schematische Teilschnittansichten eines Ausführungsbeispiels einer erfindungsgemäßen Scheibenbremse mit einer erfindungsgemäßen Verschleißnachstellvorrichtung;
- Fig. 4-4b: schematische Schnittansichten von Baugruppen des Ausführungsbeispiels nach Fig. 2 und 3;
- Fig. 5: eine schematische Schnittansicht längs Linie V-V nach Fig. 2;
- Fig. 6-7: schematische Teilschnittansichten des Ausführungsbeispiels der erfindungsgemäßen Scheibenbremse nach Fig. 2 und 3 mit einer Variante der erfindungsgemäßen Verschleißnachstellvorrichtung; und
- Fig. 8-8b: schematische Schnittansichten von Baugruppen des ersten Ausführungsbeispiels mit der Variante nach Fig. 6 und 7.

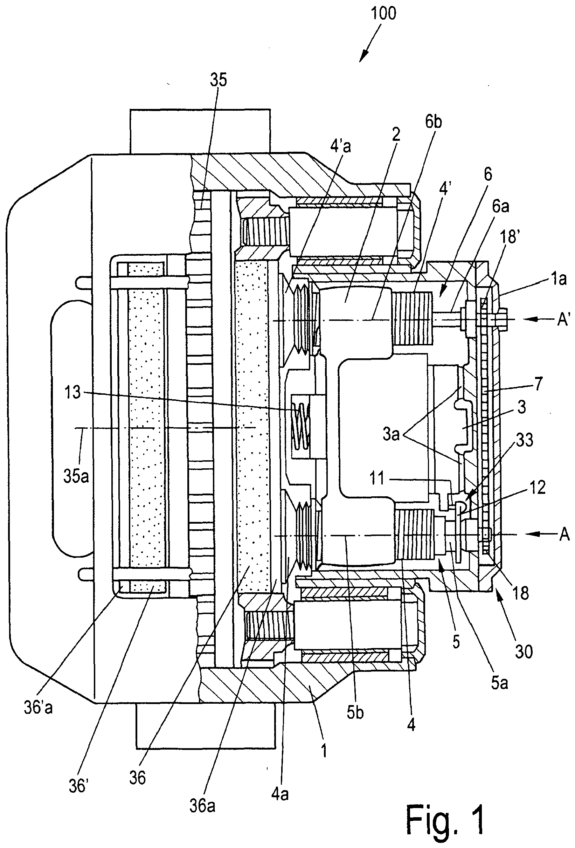

Fig. 1 zeigt eine schematische Teilschnittansicht einer üblichen Scheibenbremse 100 in einer Draufsicht mit einer Verschleißnachstellvorrichtung 30 und Synchronisationseinrichtung.

Die Scheibenbremse 100 weist eine Bremsscheibe 35 mit einer Bremsscheibenachse 35a auf. Die Bremsscheibe 35 ist von einem, hier als Schwimmsattel ausgeführten, Bremssattel übergriffen, welcher auch als Bremsengehäuse 1 bezeichnet wird. Beiderseits der Bremsscheibe 35 ist ein Bremsbelag 36, 36' mit jeweils einem Bremsbelagträger 36a, 36'a angeordnet. Die Scheibenbremse 100 ist hier als zweistempelige Bremse mit zwei Spindeleinheiten A und A' mit jeweils einem Druckstempel 4, 4' ausgebildet. Die in Fig. 1 rechts befindliche Seite der Scheibenbremse 1 wird als Zuspannseite und die links befindliche Seite wird als Belagschachtseite bezeichnet.

Der zuspannseitige Bremsbelag 36 steht mit seinem Bremsbelagträger 36a mit den Spindeleinheiten A, A' an Enden der Druckstempeln 4, 4' über Druckstücke 4a, 4'a in Verbindung. Der andere Bremsbelag 36' mit seinem Bremsbelagträger 36'a wird auch reaktionsseitiger Bremsbelag 36'a genannt und ist auf der anderen Seite der Bremsscheibe 35 im Bremsengehäuse 1 festgelegt. Die Druckstempel 4, 4' sind jeweils in einer Traverse 2 in Gewinden verdrehbar angeordnet.

Die Traverse 2 und somit die Druckstempel 4, 4' sind von einer Zuspannvorrichtung, hier ein Bremshebel 3 mit einer Schwenkachse rechtwinklig zu der Bremsscheibenachse 35a betätigbar. Der Bremshebel 3 weist einen nicht näher bezeichneten Hebelkörper auf, welcher mit der Traverse 2 in Zusammenwirkung steht und sich hier über Lager 3a am Bremsengehäuse 1 in einer Exzenterlagerung abstützt. Die Lager 3a sind z.B. Halbschalen-Nadellager.

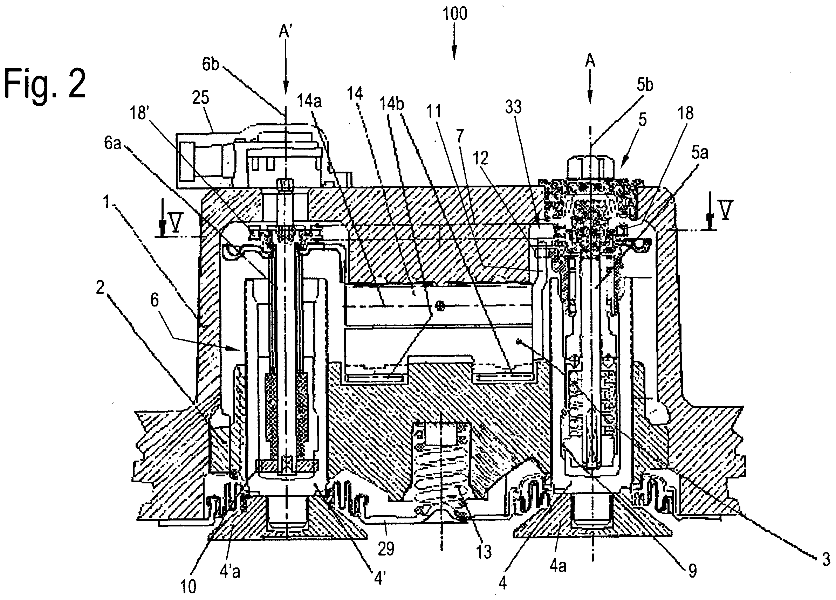

Die Traverse 2 ist in Richtung der Bremsscheibenachse 35a durch den Bremshebel 3 verstellbar. Eine Bewegung auf die Bremsscheibe 2 wird als Zuspannbewegung bezeichnet, und eine Bewegung in Gegenrichtung wird Lösebewegung genannt. Eine nicht weiter erläuterte Rückstellfeder 13 ist in der Mitte der Traverse 2 in einer entsprechenden Ausnehmung auf der belagseitigen Seite der Traverse 2 aufgenommen und stützt sich an einem Boden 29 (siehe Fig. 2) ab, der am Bremsengehäuse 1 befestigt ist. Mittels der Rückstellfeder 13 wird die Traverse 2 bei der Lösebewegung in die in Fig. 1 gezeigt gelöste Stellung der Scheibenbremse 100 zurück gestellt.

Ein Abstand zwischen den Bremsbelägen 36, 36' und der Bremsscheibe 35 in der gelösten Stellung wird als Lüftspiel bezeichnet. Infolge von Belag- und Scheibenverschleiß wird dieses Lüftspiel größer.

Die Verschleißnachstellvorrichtung 30 mit der Synchronisationseinrichtung ist zur Verschleißnachstellung eines vorher festgelegten Lüftspiels, das als Nominallüftspiel bezeichnet wird, ausgebildet. Unter dem Begriff "Nachstellung" ist eine Lüftspielverkleinerung zu verstehen. Das vorher festgelegte Lüftspiel ist durch die Geometrie der Scheibenbremse 100 bestimmt und weist ein so genanntes konstruktives Lüftspiel auf. Mit anderen Worten, die Verschleißnachstellvorrichtung 30 verkleinert ein vorhandenes Lüftspiel, wenn dieses in Bezug auf ein das vorher festgelegte Lüftspiel zu groß ist.

Die Verschleißnachstellvorrichtung 30 umfasst hier einen Nachsteller 5 und einen Mitnehmer 6. Der Nachsteller 5 ist an der einen Spindeleinheit A koaxial zu dieser, zu deren Druckstempel 4 und einer Nachstellerachse 5b angeordnet. Die Bauteile und Funktionsgruppen des Nachstellers 5, welche hier nicht erläutert werden sollen, sind auf einer Nachtstellerwelle 5a angeordnet. Der Nachsteller 5 ist mit dem Druckstempel 4 über einen Nachstellerabtrieb 9 (siehe Fig. 2) gekoppelt. Die Beschreibung eines solchen Nachstellers 5 ist z.B. dem Dokument DE 10 2004 037 771 A1 zu entnehmen.

Der Mitnehmer 6 ist mit einer Mitnehmerwelle 6a koaxial zu der anderen Spindeleinheit A', zu deren Druckstempel 6' und einer Mitnehmerachse 6b angeordnet. Der Mitnehmer 6 steht über einen Mitnehmerabtrieb 10 (siehe Fig. 2) mit dem zugehörigen Druckstempel 4' in Wirkverbindung.

Die Nachstellerachse 5b, die Mitnehmerachse 6b und die Bremsscheibenachse 35a sind parallel zueinander angeordnet. Der Nachsteller 5 und der Mitnehmer 6 sind in hier in der zuspannseitigen Oberseite des Bremsengehäuses 1 mit nicht näher beschriebenen Lagerungen gehalten.

Der Nachsteller 5 der Verschleißnachstellvorrichtung 30 steht über einen Antrieb 33 mit dem Bremshebel 3 in Zusammenwirkung. Der Antrieb 33 umfasst einen Betätiger 11, welcher mit dem Bremshebel 3 verbunden ist, und ein Antriebselement in Form einer Schaltgabel 12 des Nachstellers 5.

Die Scheibenbremse 100 kann unterschiedliche Kraftantriebe aufweisen. Der Bremshebel 3 wird hier z.B. pneumatisch betätigt. Zu Aufbau und Funktion einer pneumatischen Scheibenbremse 100 mit weiterer ausführlicher Beschreibung wird auf das Dokument DE 40 32 886 A1 verwiesen.

Der Nachsteller 5 und der Mitnehmer 6 sind durch die Synchronisationseinrichtung derart gekoppelt, dass eine Verdrehbewegung des Druckstempels 4 um die Nachtstellerachse 5b eine Verdrehbewegung des Druckstempels 4' um die Mitnehmerachse 6b bewirkt und umgekehrt. Die Synchronisationseinrichtung ist hier außerhalb des Bremsengehäuses 1 auf einer Oberseite desselben unterhalb des Deckels 1a angeordnet. Die Synchronisationseinrichtung umfasst ein Synchronrad 18, das mit dem Druckstempel 4 der einen Spindeleinheit A und mit dem Nachsteller 5 gekoppelt ist, ein weiteres Synchronrad 18', das mit dem Druckstempel 4' der anderen Spindeleinheit A' und mit dem Mitnehmer 6 gekoppelt ist, und ein Synchronmittel 7, mit welchem die Synchronräder 18 und 18' gekoppelt sind. Die Synchronräder 18 und 18' sind hier als Kettenräder und das Synchronmittel 7 als eine Kette, insbesondere als eine Rollen-Gliederkette ausgebildet. Damit ist eine synchrone Bewegung der Druckstempel 4 und 4' der Spindeleinheiten A und A' bei Verschleißnachstellvorgängen (Antrieb durch den Nachsteller 5 bewirkt durch die Bewegung des Bremshebels 3 über den Antrieb 33) und Einstellungen bei Wartungsarbeiten, z.B. Belagwechsel, (manueller Antrieb über ein Betätigungsende des Mitnehmers 6) gewährleistet.

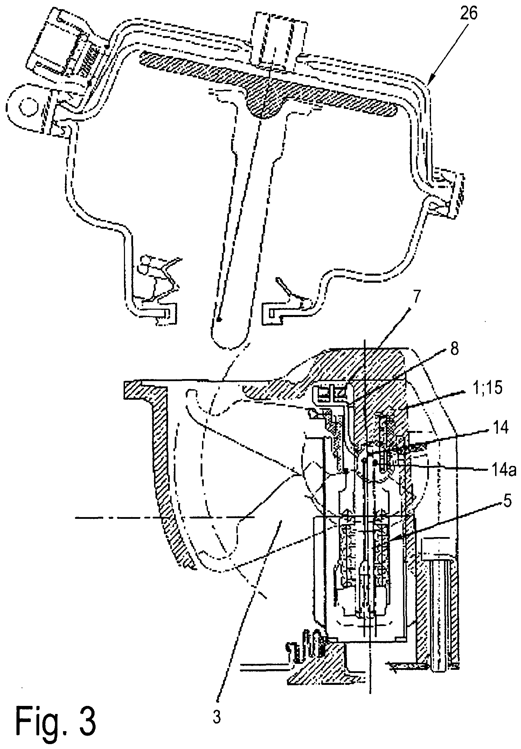

Fig. 2 und 3 zeigen schematische Teilschnittansichten eines Ausführungsbeispiels einer erfindungsgemäßen Scheibenbremse 100 mit einer erfindungsgemäßen Verschleißnachstellvorrichtung 30. Die Bremsscheibe 35 mit den beidseitigen Bremsbelägen 36 und 36' ist nicht dargestellt, aber im Zusammenhang mit Fig. 1 leicht vorstellbar. Ebenso ist das die Bremsscheibe 35 übergreifende Bremsengehäuse 1 nur zum Teil gezeigt. Fig. 2 stellt eine Längsschnittansicht (Schnittebene in Längsrichtung der Traverse 2) dar, wobei Fig. 3 eine Querschnittansicht (Schnittebene quer zur Traverse 2) zeigt.

Der Nachsteller 5 ist im Hohlraum der Druckspindel 4 axial verschiebbar aufgenommen und greift mit seinem Nachstellerabtrieb 9 zur Übertragung der Antriebsdrehbewegung in eine Innenverzahnung der Druckspindel 4 ein. Die Betätigung des Nachstellers 5 erfolgt aus dem Schwenkhub des Bremshebels 3 mittels des Antriebs 33 über den mit diesem fest verbundenen Betätiger 11, welcher die Antriebsbewegung auf die Schaltgabel 12 des Nachstellers 5 in der Art eines Winkelgetriebes überträgt. Die daraus resultierende Nachstelldrehbewegung wird vom Nachsteller 5 (im Falle einer Verschleißnachstellung) direkt auf die Druckspindel 4 und über die Synchronisationseinrichtung (Synchronmittel 7 und Synchronräder 18, 18') auf den Mitnehmer 6 und von diesem auf die andere Druckspindel 4' übertragen.

Der Mitnehmer 6 ist in ähnlicher Weise wie der Nachsteller 5 in den Hohlraum der Spindel 4' axial verschiebbar eingesetzt und weist einen Mitnehmerabtrieb 10 auf, der mit einer Innenverzahnung der Druckspindel 4' zusammenwirkt.

Weiterhin ist das obere Ende des Mitnehmers 6 hier mit einer nicht näher erläuterten Sensoreinheit 25 zur Erfassung des Verschleißes von Bremsbelägen 36, 36' und Bremsscheibe 35 gekoppelt.

In diesem Ausführungsbeispiel ist der Bremshebel 3 mit einer zu Fig. 1 unterschiedlichen Lagerung angeordnet. Eine Lagerwalze 14 mit einer Lagerwalzenachse 14a der mit Halbschalen-Nadellagern umhüllten Exzenterlagerung stützt sich über nicht näher bezeichnete Lager an einem Abstütznocken 15 des Bremsengehäuses 1 ab, wobei zwischen der Lagerwalze 14 und der Traverse 2 der Bremshebel 3 um die Lagerwalzenachse 14 verschwenkbar angeordnet ist. Der Bremshebel 3 ist dabei mit zwei Lagern 14b an der Traverse 2 abgestützt, wobei die Lager 14b (z.B. Halbschalen-Nadellager) an der Traverse 2 angeordnet sind.

Fig. 3 zeigt den Bremshebel 3 in unbetätigter Stellung (obere Position) und in betätigter Stellung (untere Position). In der betätigten Stellung ist der Bremshebel 3 gegen den Uhrzeigersinn um die Lagerwalzenachse 14a verschwenkt und hat die Traverse 2 aufgrund der Exzenterlagerung nach unten gedrückt, wobei die Bremse zugespannt ist. Außerdem ist ein Bremszylinder 26 mit einer Kolbenstange 27 schematisch dargestellt, bevor er an dem Bremsengehäuse 1 montiert ist. Die Kolbenstange 27 ist zur Zusammenwirkung mit dem Bremshebel 3 bestimmt und drückt ihn bei Betätigung, d.h. bei Zuspannung der Bremse, in die untere Position, was leicht vorstellbar ist.

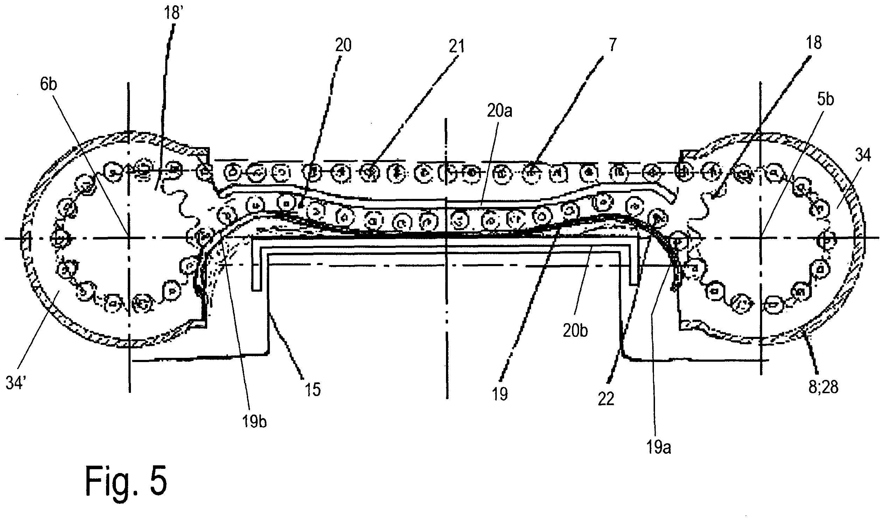

Durch diese oben beschrieben Anordnung von Bremshebel 3 und Lagerwalze 14 ist eine besonders platzsparende Anordnung des Synchronmittels 7 der Synchronisationseinrichtung der Verschleißnachstellvorrichtung 30 ermöglicht. Wie aus Fig. 3 deutlich zu erkennen ist, ist das Synchronmittel 7 auf einem Trägerelement 8 im Gegensatz zur üblichen Ausführung nach Fig. 1 neben dem Abstütznocken 15 des Bremsengehäuses 1 angeordnet. Mittels einer Klemmlasche 8a am Trägerelement 8 ist das Trägerelement 8 zwischen Lagerwalze 14 und Abstütznocken 15 geklemmt befestigt. Das unten im Zusammenhang mit Fig. 5 noch ausführlich erläuterte Trägerelement 8 ist durch die Lagerwalze 14 unter Einwirkung der Kraft der Rückstellfeder 13, welche über die Traverse 2 und den Bremshebel 3 auf die Lagerwalze 14 einwirkt, gegen den Abstütznocken 15 des Bremsengehäuses 1 gehalten. Von diesem Befestigungsbereich des Trägerelementes 8 ragt eine Verbindungslasche parallel zur Wand des Abstütznockens 15 (zur Seite des Bremshebels 3 hin) nach oben, d.h. zum Bremszylinder 26, wo auf diesem Trägerelement 8 die Aufnahmelagerungen 34, 34' (siehe Fig. 5) für den Nachsteller 5 und den Mitnehmer 6 sowie ein Führungskanal 20 (siehe auch Fig. 5) für das Synchronmittel 7 ausgebildet sind. Dazu zeigt Fig. 3 das Synchronmittel 7 als Rollen-Gliederkette, wobei beide Trums, ein Lasttrum 21 und ein Leertrum 22 (siehe Fig. 5) der Kette nebeneinander durch das Trägerelement 8 gehalten und in einem geringen Abstand von einander geführt sind. Dies wird unten noch näher beschrieben.

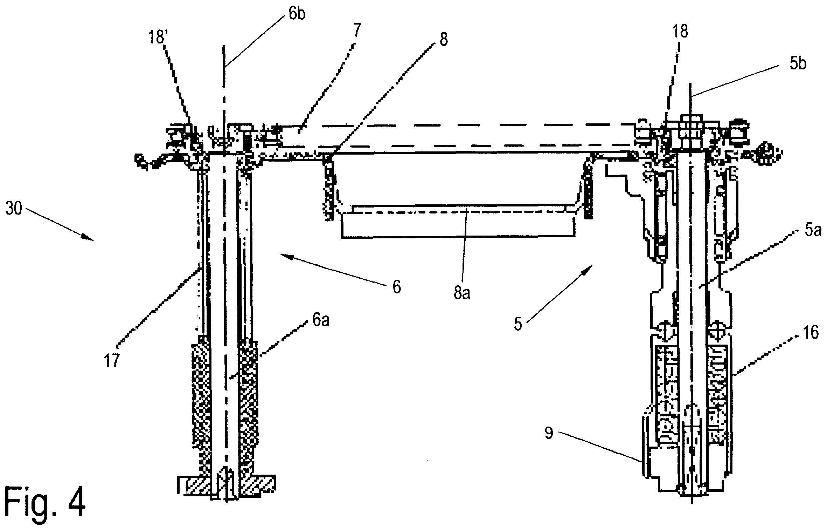

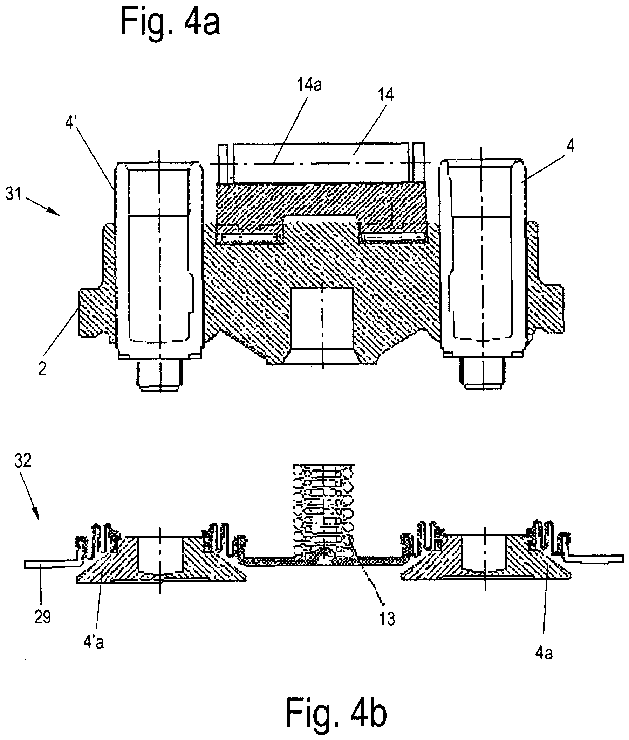

Fig. 4 bis 4b zeigen schematische Schnittansichten von Baugruppen des Ausführungsbeispiels nach Fig. 2 und 3, wobei die Baugruppen auseinander genommen bzw. noch nicht miteinander montiert sind.

Fig. 4 zeigt die Verschleißnachstellvorrichtung 30 mit der Synchronisationseinrichtung einschließlich Nachsteller 5 und Mitnehmer 6. Die Synchronisationseinrichtung umfasst hier das Synchronmittel 7, die Synchronräder 18, 18' und das Trägerelement 8. Die Ausbildung des Trägerelementes 8 mit den oben beschriebenen Verbindungslaschen und der Klemmlasche ist deutlich zu erkennen. Der Nachsteller 5 und der Mitnehmer 6 einschließlich des Synchronmittels 7 zusammen mit dem Trägerelement 8 werden durch die Kraft einer Nachstellerdruckfeder 16 und einer Mitnehmerdruckfeder 17 gehalten. Die Verschleißnachstellvorrichtung 30 bildet mit dem Nachsteller 5, dem Mitnehmer 6 und der Synchronisationseinrichtung 7, 8, 18, 18' eine vormontierte Baugruppe bzw. Baueinheit.

Eine weitere vormontierte Baugruppe bildet hier die Traverse 2 mit den in sie eingeschraubten Druckstempeln 4 und 4' als eine Traversengruppe 31. Diese ist in Fig. 4a mit der Lagerwalze 14 und der Lagerwalzenachse 14a gezeigt.

Fig. 4b stellt eine Bodengruppe 32 als weitere Baugruppe mit dem Boden 29, z.B. ein Blech, mit nicht näher bezeichneten Dichtungsbälgen, welche die Druckstücke 4a und 4'a mit dem Boden 29 dicht verbinden, sowie mit der auf dem Boden 29 zuspannseitig mittig angeordneten Rückstellfeder 13.

Fig. 5 zeigt eine schematische Schnittansicht längs Linie V-V nach Fig. 2.

In Fig. 5 ist die Synchronisationseinrichtung mit den Bauteilen 7, 8, 18 und 18' in einer Ebene durch die Synchronrädermitten dargestellt. Das Synchronrad 18 dreht sich um die Nachstellerachse 5b, wobei sich das andere Synchronrad 18' um die Mitnehmerachse 6b dreht.

Fig. 5 zeigt die Gestaltung des Trägerelementes 8 im Bereich des Synchronmittels 7. Das Trägerelement 8 ist hier z.B. als Metallblech als Zieh- und Biegeteil oder StanzBiegeteil ausgeführt.

Das Trägerelement 8 umfasst einen mittleren Abschnitt, welcher den Führungskanal 20 mit Führungsabschnitten 20a und 20b in Längsrichtung (der Traverse 2) bildet. An beiden Enden des Führungskanals 20 ist jeweils im Bereich eines Synchronrads 18, 18' (hier Kettenräder) eine Aufnahmelagerung 34, 34' für den Nachsteller 5 und den Mitnehmer 6 ausgebildet. Der mittlere Abschnitt des Trägerelementes 8 mit dem Führungskanal 20 verbindet die beiden Aufnahmelagerungen 34, 34', welche jeweils einen Kreisbereich von etwa 270° bilden, der z.B. tiefgezogen ist. Der Führungskanal 20 verläuft nicht symmetrisch zu einer gedachten Mittellinie zwischen der Nachstellerachse 5b und der Mitnehmerachse 6b, sondern diese gedachte Mittellinie verläuft im Bereich des Führungsabschnitts 20b. D.h. der Führungskanal 20 befindet sich in der in Fig. 5 gezeigten oberen Hälfte des mittleren Abschnitts des Trägerelementes 8. Auf diese Weise ist in der unteren Hälfte dieses mittleren Abschnitts zwischen den Aufnahmelagerungen 34 und 34' ein Freiraum derart geschaffen, dass der Abstütznocken 15 des Bremsengehäuses 1 darin Platz findet. So kann die Synchronisationseinrichtung 7, 8, 34, 34' auf besonders platzsparende Weise um den Abstütznocken 15 herum angeordnet werden.

Der Führungskanal 20 besteht aus einem Bodenabschnitt des Trägerelementes 8, wobei die Führungsabschnitte 20a und 20b von dem Bodenabschnitt hervorstehen. Die Führungsabschnitte 20a und 20b sind z.B. umgekantet und erstrecken sich nach oben (hier senkrecht auf der Zeichnungsebene stehenden). Der Führungsabschnitt 20a ist für das Leertrum 22 des Synchronmittels 7 wellenförmig gestaltet. Der geradlinig ausgeführte Führungsabschnitt 20b mit hier rechtwinklig umgekanteten Ecken umgreift den Abstütznocken 15 des Bremsengehäuses 1 und dient zur Befestigung einer Vorspannfeder 19, die zum größten Teil über ihre Länge korrespondierend zu dem wellenförmigen Führungsabschnitt 20a ebenfalls wellenförmig ausgebildet ist und das Leertrum 22 des Synchronmittels 7 gegen den Führungsabschnitt 20a drückt. Die Vorspannfeder 19 kann an dem geradlinigen Führungsabschnitt 20b z.B. angeschweißt, aufgeklemmt oder anderweitig befestigt sein. Sie leitet mit ihren in etwa viertelkreisförmig gebogenen Endbereichen 19a und 19b das Leertrum 22 des Synchronmittels 7 unter Vorspannung in den Führungskanal 20. Außerdem wird dadurch ein Umschlingungswinkel der Synchronräder 18, 18' durch das Synchronmittel vergrößert, wodurch sich ein Spiel verkleinert. Die Vorspannfeder 19 bildet auch eine Art Kettenspanner.

Die Wellenform des Führungsabschnitts 20a und der Vorspannfeder 19 als seitliche Führungen des Führungskanals 20 wurde gewählt, um bei geringem Bauraum einen größtmöglichen durch Toleranz bedingten Längenunterschied der Rollen-Gliederkette als Synchronmittel 7 ausgleichen zu können.

Ein Lasttrum 21 des Synchronmittels 7 verläuft geradlinig in geringem Abstand neben dem am wellenförmigen Führungsabschnitt 20a geführten Leertrum 22.

Bei maximaler Kettenlänge des Synchronmittels 7 federt die Vorspannfeder 19 vollständig aus und zwingt die Rollen-Gliederkette 7 in die durch die seitliche Begrenzungen des Führungsabschnitts 20a und der Vorspannfeder 19 vorgegebene Wellenform. Bei minimaler Länge der Rollen-Gliederkette 7 wird das Leertrum 22 stärker gestrafft, so dass die Vorspannfeder 19 bis zu ihrem Anschlag an dem Trägerelement 8 zurück gedrückt wird, wodurch ein direkter Einlauf und eine geradlinige Durchführung des Synchronmittels 7, hier der Rollen-Gliederkette 7, im Führungskanal 20 mit seinen seitlichen Begrenzungen Führungsabschnitt 20a und Vorspannfeder 19 erzielt wird.

In einer alternativen Ausführungsform erfolgt die Befestigung der Synchronisationseinrichtung nicht durch Klemmen des Trägerelementes 8 zwischen Lagerwalze 14 und Abstütznocken 15 mittels der Klemmlasche 8a am Trägerelement 8, sondern in einer Variante durch Einpressen und Sichern im Bremsengehäuse 1.

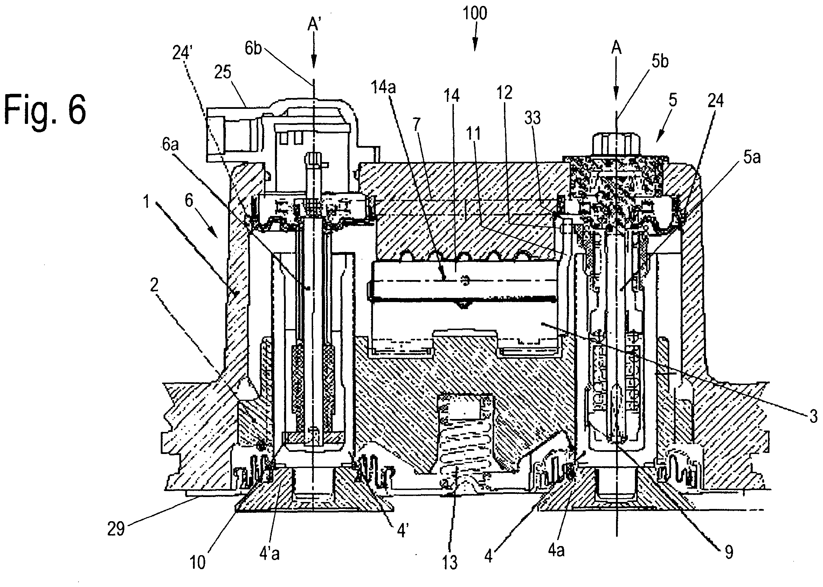

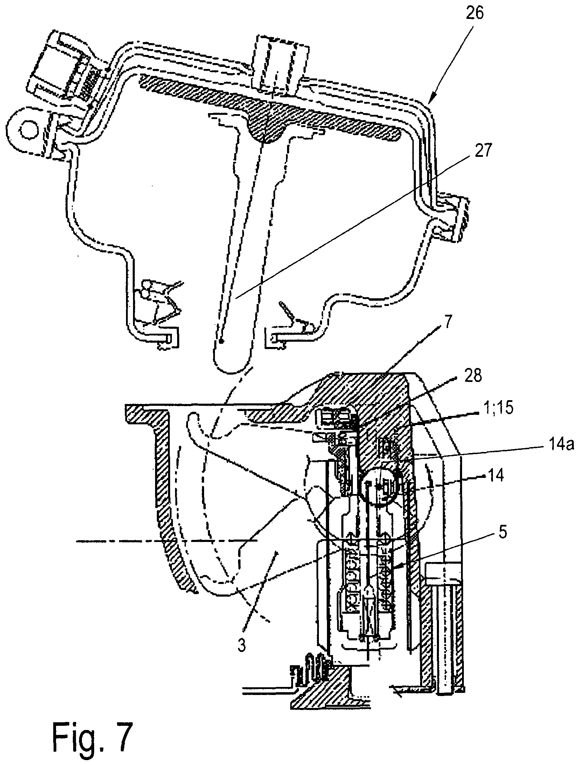

Dazu zeigen Fig. 6 und 7 ähnlich wie Fig. 2 und 3 schematische Teilschnittansichten des Ausführungsbeispiels der erfindungsgemäßen Scheibenbremse nach Fig. 2 und 3 mit der Variante der erfindungsgemäßen Verschleißnachstellvorrichtung 30.

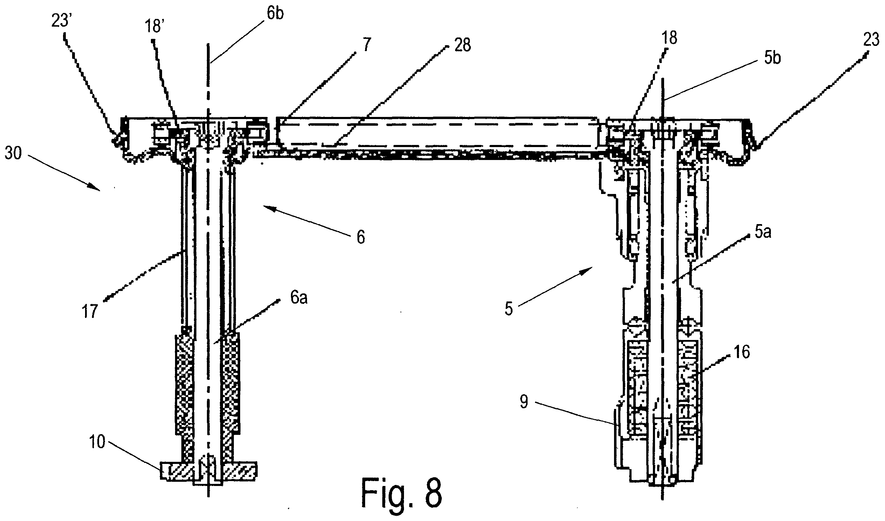

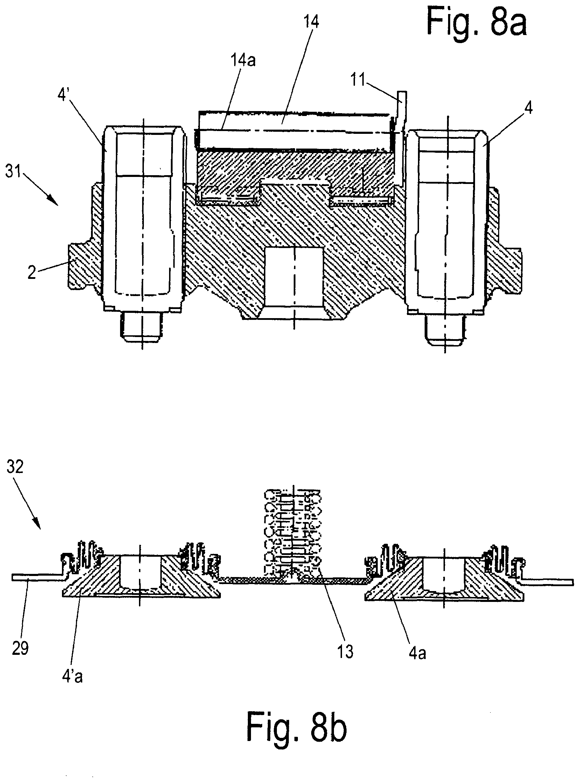

Fig. 8 bis 8b stellen wie Fig. 4 bis 4b schematische Schnittansichten von Baugruppen des ersten Ausführungsbeispiels mit der Variante nach Fig. 6 und 7 dar. Zur Beschreibung von Fig. 8 bis 8b in Bezug auf gleiche Funktionsteile wird auf die oben ausgeführte Beschreibung im Zusammenhang mit Fig. 4 bis 4b verwiesen.

Es ist in dieser Variante ein Trägerelement 28 vorgesehen, welches im Bereich des Führungskanals 20 wie das Trägerelement 8 gemäß Fig. 5 ausgebildet ist, jedoch darunter keine Klemmlasche 8a (siehe Fig. 4) aufweist. Außerdem ist das Trägerelement 28 an seinen Seitenrändern der Aufnahmelagerungen 34, 34' mit seitlich hervorstehenden Rastnasen 23, 23' ausgebildet, wie Fig. 8 deutlich zeigt.

Die Synchronisationseinrichtung umfasst in dieser Variante das Synchronmittel 7, das Trägerelement 28 und die Synchronräder 18, 18'.

Das Bremsengehäuse 1 ist im Bereich von Nachsteller 5 und Mitnehmer 6 mit je einer etwa halbkreisförmigen bearbeiteten Fläche zur passgenauen Aufnahme der Seitenränder der Aufnahmelagerungen 34, 34' versehen. In diese halbkreisförmigen bearbeiteten Flächen des Bremsengehäuses 1 wird das Trägerelement 28 eingepresst und durch die Rastnasen 23, 23' derart gesichert, dass die seitlich hervorstehenden Rastnasen 23, 23' jeweils in Rastnuten 24, 24', welche in den halbkreisförmigen bearbeiteten Flächen des Bremsengehäuses 1 eingeformt sind, eingreifen. Die Rastnasen 23, 23' sind federnd ausgebildet und schnappen in die Rastnuten 24, 24' beim Einsetzen des Trägerelementes 28 ein. Auf diese Weise wird die Synchronisationseinrichtung mit dem Trägerelement 28 sicher im Bremsengehäuse 1 gehalten. Dies ist in Fig. 6 deutlich zu erkennen.

Ein Zusammenbau der Baugruppen 30, 31, 32 (siehe Fig. 4-4b und 8-8b) erfolgt dergestalt, dass zuerst die Bodengruppe 32 mit der Traversengruppen 31 montiert wird, wobei die Rückstellfeder 13 in die zugehörige (nicht bezeichnete) Aufnahme in die Unterseite der Traverse 2 eingesetzt wird und die Druckstücke 4a, 4'a jeweils mit der zugehörigen Druckspindel 4, 4' verbunden werden. Dann wird der Bremshebel 3 (siehe Fig. 2 und 3) mit der Lagerwalze 14 und den zugehörigen Lagern auf der Oberseite der Traverse 2 montiert. Schließlich wird die Verschleißnachstellvorrichtung 30 in die Druckspindeln 4, 4' eingesetzt, wobei der Nachsteller 5 in die eine Druckspindel 4 und der Mitnehmer 6 in die andere Druckspindel 4' eingeführt werden. Dann werden diese so angeordneten Baugruppen 30, 31 und 32 in das Bremsengehäuse 1 von der Belagseite (siehe Fig. 2 und 3) eingesetzt, wobei der Boden an dem Bremsengehäuse 1 in nicht näher gezeigter Weise befestigt wird. Die Synchronisationseinrichtung 7, 8, (28) 18, 18' ist somit als eine so genannte innen liegende Synchronisationseinrichtung innerhalb des Bremsengehäuses 1 angeordnet.

Die oben beschriebenen Ausführungsbeispiele beschränken die Erfindung nicht, welche im Rahmen der beigefügten Ansprüche modifizierbar ist.

Das Synchronmittel 7 kann natürlich auch ein Zahnriemen sein.

So ist es z.B. denkbar, dass die Vorspannfeder 19 aus mehreren Blattfedern bestehen kann.

Das Trägerelement 8, 28 kann auch aus einer geeigneten Kunststoffausführung bzw. Kombination mit Metallwerkstoffen hergestellt sein.

Der mittlere Abschnitt des Trägerelementes 8, 28 kann eine Bodenabschnitt nur für das Leertrum 22 oder für das Leertrum 22 und das Lasttrum 21 aufweisen.

Denkbar ist dabei auch, das Teile des Führungskanals 20, der Führungsabschnitt 20a und/oder die zum Führungskanal 19 weisende Seite der Vorspannfeder 19 mit einem Werkstoff beschichtet oder aus einem solchen hergestellt sind, der dem Synchronmittel 7 einen äußerst geringen Reibungswiderstand entgegensetzt.

Außerdem kann es möglich sein, dass der Nachsteller 5 und der Mitnehmer 6 nicht zum Einstecken in die Druckspindeln 4, 4' sondern zum Aufsetzen auf die Druckspindeln 4, 4' vorgesehen sind. Dabei können der Nachsteller 5 und der Mitnehmer 6 mit den Druckspindeln 4, 4' an deren zuspannseitigen Enden gekoppelt sein. Es ist auch möglich, dass der Nachsteller 5 und der Mitnehmer 6 so auf die jeweilige Druckspindel 4, 4' aufsetzbar sind und diese zu einem bestimmten Teil in ihrer Länge umgeben.

### Bezugszeichenliste

- 1: Bremsengehäuse
- 1a: Deckel
- 2: Traverse
- 3: Bremshebel
- 3a: Lager
- 4, 4': Druckspindel
- 4a, 4'a: Druckstück
- 5: Nachsteller
- 5a: Nachstellerwelle
- 5b: Nachstellerachse
- 6: Mitnehmer
- 6a: Mitnehmerwelle
- 6b: Mitnehmerachse
- 7: Synchronmittel
- 8: Trägerelement
- 8a: Klemmlasche
- 9: Nachstellerabtrieb
- 10: Mitnehmerabtrieb
- 11: Betätiger
- 12: Schaltgabel
- 13: Rückstellfeder
- 14: Lagerwalze
- 14a: Lagerwalzenachse
- 14b: Lagerwalzenlager
- 15: Abstütznocken
- 16: Nachstellerdruckfeder
- 17: Mitnehmerdruckfeder
- 18, 18': Synchronrad
- 19: Vorspannfeder
- 20: Führungskanal
- 20a, 20b: Führungsabschnitt
- 21: Lasttrum
- 22: Leertrum
- 23, 23': Rastnase
- 24, 24': Rastnut
- 25: Sensoreinheit
- 26: Bremszylinder
- 27: Kolbenstange
- 28: Trägerelement
- 29: Boden
- 30: Verschleißnachstellvorrichtung
- 31: Traversengruppe
- 32: Bodengruppe
- 33: Nachstellerantrieb
- 34, 34': Aufnahmelagerung
- 35: Bremsscheibe
- 35a: Bremscheibenachse
- 36, 36': Bremsbelag
- 36a, 36'a: Bremsbelagträger
- 100: Scheibenbremse
- A, A': Spindeleinheit

## Patentansprüche

1. Verschleißnachstellvorrichtung (30) zur Nachstellung eines Reibflächenverschleißes an Bremsbelag (36, 36') und Bremsscheibe (35) einer Scheibenbremse (100), insbesondere für ein Kraftfahrzeug, mit einer Zuspannvorrichtung, vorzugsweise mit einem Bremshebel (3), deren Exzenterlagerung an der Traverse (2) angeordnet ist, wobei die Verschleißnachstellvorrichtung (30) antriebsseitig mit der Zuspannvorrichtung, vorzugsweise mit dem Bremshebel (3), und abtriebsseitig mit einer von mindestens zwei Spindeleinheiten (A, A') der Scheibenbremse (100) koppelbar ist, aufweisend:
a) einen Nachsteller (5), der mit der einen der mindestens zwei Spindeleinheiten (A) koppelbar ist;
b) einen Mitnehmer (6), der mit der anderen der mindestens zwei Spindeleinheiten (A') koppelbar ist; und
c) eine Synchronisationseinrichtung zur Übertragung von Drehbewegungen zwischen Nachsteller (5) und Mitnehmer (6),
wobei die Synchronisationseinrichtung mindestens ein Synchronmittel (7), Synchronräder (18, 18') und ein Trägerelement (8, 28) umfasst, wobei die Synchronräder (18, 18') mit dem Synchronmittel (7) in Zusammenwirkung stehen und jeweils mit dem Nachsteller (5) und dem Mitnehmer (6) gekoppelt sind, wobei das Synchronmittel (7) ein Zugmittel, insbesondere eine Rollen-Gliederkette, ist, wobei das Trägerelement (8, 28) einen Führungskanal (20) zur Führung des Synchronmittels (7) aufweist, wobei der Führungskanal (20) eine Bodenfläche mit seitlichen Führungsabschnitten (20a, 20b) aufweist, wobei die Führungsabschnitte (20a, 20b) von der Bodenfläche des Führungskanals (20) hervorstehen und der eine Führungsabschnitt (20a) der Führungsabschnitte (20a, 20b) wellenförmig ausgebildet ist,
**dadurch gekennzeichnet,**
**dass** der andere Führungsabschnitt (20b) der Führungsabschnitte (20a, 20b) mit einer Vorspannfeder (19) versehen ist, welche einen Leertrum (22) des Synchronmittels (7) gegen den einen Führungsabschnitt (20a) drückt und dass die Vorspannfeder (19) gebogene Endbereiche (19a, 19b) zur Führung des Leertrums (22) des Synchronmittels (7) unter Vorspannung in den Führungskanal (20) aufweist.

2. Verschleißnachstellvorrichtung (30) nach Anspruch 1, **dadurch gekennzeichnet, dass** das Trägerelement (8, 28) an jedem Ende des Führungskanals (20) eine Aufnahmelagerung (34, 34') zur jeweiligen Lagerung des Nachstellers (5) und des Mitnehmers (6) aufweist.

3. Verschleißnachstellvorrichtung (30) nach Anspruch 2, **dadurch gekennzeichnet, dass** das Trägerelement (8) eine Klemmlasche (8a) aufweist, welche zur Festlegung des Trägerelementes (8) zwischen einer Lagerwalze (14) und einem Abstütznocken (15) eines Bremsengehäuses (1) der zuzuordnenden Scheibenbremse (100) vorgesehen ist.

4. Verschleißnachstellvorrichtung (30) nach Anspruch 2, **dadurch gekennzeichnet, dass** das Trägerelement (28) an den Seiten der Aufnahmelagerungen (34, 34') jeweils mindestens eine seitlich hervorstehende Rastnase (23, 23') zur Festlegung in Rastnuten (24, 24'), die in ein Bremsengehäuse (1) der zuzuordnenden Scheibenbremse (100) eingeformt sind, aufweist.

5. Verschleißnachstellvorrichtung (30) nach einem der vorhergehenden Ansprüche, **dadurch gekennzeichnet, dass** der Nachsteller (5) und der Mitnehmer (6) in Hohlräume von Druckspindeln (4, 4') einsteckbar oder auf Druckspindeln (4, 4') der zuzuordnenden Scheibenbremse (100) aufsetzbar sind.

6. Verschleißnachstellvorrichtung (30) nach einem der vorhergehenden Ansprüche, **dadurch gekennzeichnet, dass** die Verschleißnachstellvorrichtung (30) als vormontierte Baugruppe ausgebildet ist.

7. Scheibenbremse (100), vorzugsweise druckluftbetätigt, insbesondere für ein Kraftfahrzeug, mit einem Bremsengehäuse (1), einer Zuspannvorrichtung, vorzugsweise mit einem Bremshebel (3), deren Exzenterlagerung an der Traverse (2) angeordnet ist, mindestens zwei Spindeleinheiten (5, 5'), einer Traverse (2) und mindestens einer Verschleißnachstellvorrichtung (30) nach einem der vorhergehenden Ansprüche, welche mit der Zuspannvorrichtung, vorzugsweise mit dem Bremshebel (3), gekoppelt ist,
**dadurch gekennzeichnet,**
**dass** die Synchronisationseinrichtung der Verschleißnachstellvorrichtung (30) innen liegend innerhalb des Bremsengehäuses (1) angeordnet ist.

8. Scheibenbremse (1) nach Anspruch 7, **dadurch gekennzeichnet, dass** die Verschleißnachstellvorrichtung (30) mittels des Trägerelementes (8) zwischen der Zuspannvorrichtung, vorzugsweise dem Bremshebel (3), einer Lagerwalze (14) und einem Abstütznocken (15) des Bremsengehäuses (1) klemmend gehalten ist.

9. Scheibenbremse (1) nach Anspruch 7, **dadurch gekennzeichnet, dass** die Verschleißnachstellvorrichtung (30) mittels des Trägerelementes (8) in passgenauen Aufnahmen des Bremsengehäuses (1) durch Einpressen in dem Bremsengehäuse (1) gehalten und mittels Rastnasen (23, 23') in Rastnuten (24, 24') des Bremsengehäuses (1) in dem Bremsengehäuse (1) gesichert ist.

## Claims

1. A wear adjustment device 30 for adjusting friction surface wear on a brake pad 36, 36' and a brake disk 35 of a disk brake 100, in particular for a motor vehicle, with an application device, preferably with a brake lever 3, which has an eccentric bearing arranged on the cross member 2, it being possible to couple the wear adjustment device 30 with the application device, preferably with the brake lever 3, on the input side and with one of at least two spindle units A, A' of the disk brake 100 on the output side, having:
a) an adjuster 5, which can be coupled with one of the at least two spindle units A;
b) a carrier 6, which can be coupled with the other of the at least two spindle units A';
c) a synchronisation device for transferring rotational movements between the adjuster 5 and the carrier 6,
the synchronisation device comprising at least one synchronising means 7, synchronising gears 18, 18' and a carrier element 8, 28, the synchronising gears 18, 18' cooperating with the synchronising means 7 and each being coupled with the adjuster 5 and the carrier 6, the synchronising means 7 being a traction means, in particular a roller link chain, the carrier element 8, 28 having a guide channel 20 to guide the synchronising means 7, the guide channel 20 having a base with lateral guide sections 20a, 20b, the guide sections 20a, 20b projecting from the base of the guide channel 20 and one guide section 20a of the guide sections 20a, 20b being wave-shaped,
**characterised in that** the other guide section 20b of the guide sections 20a, 20b is provided with a pre-tensioning spring 19, which presses a slack strand 22 of the synchronising means 7 against one guide section 20a, and the pre-tensioning spring 19 has curved end sections 19a, 19b for guiding the slack strand 22 of the synchronising means 7 pre-tensioned into the guide channel 20.

2. A wear adjustment device 30 according to claim 1, **characterised in that** at each end of the guide channel 20 the carrier element 8, 28 has a receiving bearing 34, 34' for receiving the adjuster 5 and the carrier 6.

3. A wear adjustment device 30 according to claim 2, **characterised in that** the carrier element 8 has a clamping bracket 8a, which is provided to fix the carrier element 8 between a roller bearing 14 and a support cam 15 of a brake housing 1 of the corresponding disk brake 100.

4. A wear adjustment device 30 according to claim 2, **characterised in that** on the sides of the receiving bearings 34, 34' the carrier element 8 has at least one laterally projecting locking lug 23, 23' for fixing it into locking grooves 24, 24' formed in a brake housing 1 of the corresponding disk brake 100.

5. A wear adjustment device 30 according to any of the preceding claims, **characterised in that** the adjuster 5 and the carrier 6 can be inserted into cavities of pressure spindles 4, 4' or placed on pressure spindles 4, 4' of the corresponding disk brake 100.

6. A wear adjustment device 30 according to any of the preceding claims, **characterised in that** the wear adjustment device 30 is designed as a pre-assembled component.

7. A disk brake 100, preferably pneumatically actuated, in particular for a motor vehicle, with a brake housing 1, an application device, preferably with a brake lever 3, which has an eccentric bearing arranged on the cross member 2, at least two spindle units 5, 5', a cross member 2 and at least one wear adjustment device 30 according to any of the preceding claims, which is coupled with the application device, preferably with the brake lever 3,
**characterised in that** the synchronising device of the wear adjustment device 30 is arranged internally inside the brake housing 1.

8. A disk brake 1 according to claim 7, **characterised in that** the wear adjustment device 30 is held clamped by means of the carrier element 8 between the application device, preferably the brake lever 3, a roller bearing 14 and a supporting cam of the brake housing 1.

9. A disk brake 1 according to claim 7, **characterised in that** the wear adjustment device 30 is held by means of the carrier element 8 in perfectly fitting receivers of the brake housing 1 by being pressed into the brake housing 1 and secured in the brake housing 1 by means of locking lugs 23, 23' in locking grooves 24, 24' of the brake housing.

## Revendications

1. Système (30) de rattrapage d'usure pour rattraper l'usure d'une surface de friction d'une garniture (36, 36') de frein et d'un disque (35) de frein d'un frein (100) à disque, notamment pour un véhicule automobile, comprenant un système de serrage ayant de préférence un levier (3) de frein, dont le montage d'excentrique est disposé sur la traverse (2), le système (30) de rattrapage d'usure pouvant, du côté de l'entrée, être couplé au système de serrage, de préférence par le levier (3) de frein, et du côté de la sortie, à l'une d'au moins deux unités (A, A') de broche du frein (100) à disque, comportant :
a) un rattrapeur (5), qui peut être couplé à la une des au moins deux unités (A) de broche;
b) un entraîneur (6), qui peut être couplé à l'autre des au moins deux unités (A') à broche et
c) un dispositif de synchronisation pour transmettre des mouvements de rotation entre le rattrapeur (5) et l'entraîneur (6),
dans lequel le dispositif de synchronisation comprend au moins un moyen (7) de synchronisation des roues (18, 18') de synchronisation et un élément (8, 28) de support, les roues (18, 18') de synchronisation étant en liaison de coopération avec le moyen (7) de synchronisation et étant couplées respectivement au rattrapeur (5) et à l'entraîneur (6), le moyen (7) de synchronisation étant un moyen de traction, notamment une chaîne à maillons à galets, l'élément (8, 28) de support ayant un canal (20) de guidage pour guider le moyen (7) de synchronisation, le canal (20) de guidage ayant une surface de fond à parties (20a, 20b) de guidage latérales, les parties (20a, 20b) de guidage faisant saillie de la surface de fond du canal (20) de guidage et l'une des parties (20a) de guidage, parmi les parties (20a, 20b) de guidage, étant constituée de manière ondulée,
**caractérisé**
**en ce que** l'autre partie (20b) de guidage, parmi les parties (20a, 20b) de guidage, est pourvue d'un ressort (19) de précontrainte, qui pousse un brin (22) lâche du moyen (7) de synchronisation avec précontrainte dans le canal (20) de guidage.

2. Système (30) de rattrapage d'usure suivant la revendication 1, **caractérisé en ce que** l'élément (8, 28) de support a, à chaque extrémité du canal (20) de guidage, un montage (34, 34') de réception pour le montage respectif du rattrapeur (5) et de l'entraîneur (6).

3. Système (30) de rattrapage d'usure suivant la revendication 2, **caractérisé en ce que** l'élément (8) de support a une éclisse (8a) de serrage prévue pour fixer l'élément (8) de support entre un rouleau (14) formant palier et une saillie (15) d'appui d'un boîtier (1) du frein (100) à disque associé.

4. Système (30) de rattrapage d'usure suivant la revendication 2, **caractérisé en ce que** l'élément (28) de support a, sur les côtés des montages (34, 34') de réception, respectivement au moins un bec (23, 23') d'encliquetage en saillie latéralement pour la fixation dans des rainures (24, 24') d'encliquetage, qui sont formées dans un boîtier (1) du frein (100) à disque associé.

5. Système (30) de rattrapage d'usure suivant l'une des revendications précédentes, **caractérisé en ce que** le rattrapeur (5) et l'entraîneur (6) peuvent être enfoncés dans des cavités de broches (4, 4') de poussée ou être mis sur des broches (4, 4') de poussée du frein (100) à disque associé.

6. Système (30) de rattrapage d'usure suivant l'une des revendications précédentes, **caractérisé en ce que** le système (30) de rattrapage d'usure est constitué sous la forme d'un groupe de montage pré-monté.

7. Frein (100) à disque, de préférence à actionnement par de l'air comprimé, notamment pour un véhicule automobile, comprenant un boîtier (1) de frein, un système de serrage ayant de préférence un levier (3) de frein, dont le montage d'excentrique est disposé sur la traverse (2), au moins deux unités (5, 5') de broche, une traverse (2) et au moins un système (30) de rattrapage d'usure suivant l'une des revendications précédentes, qui est couplé au système de serrage, de préférence par le levier (3) de frein,
**caractérisé**
**en ce que** le dispositif de synchronisation du système (30) de rattrapage d'usure est disposé à l'intérieur dans le boîtier (1) de frein.

8. Frein (1) à disque suivant la revendication 7, **caractérisé en ce que** le système (30) de rattrapage d'usure est maintenu à serrage au moyen de l'élément (8) de support entre le système de serrage, de préférence le levier (3) de frein, un rouleau (14) de palier et une saillie (15) d'appui du boîtier (1) de frein.

9. Frein (1) à disque suivant la revendication 7, **caractérisé en ce que** le système (30) de rattrapage d'usure est maintenu au moyen de l'élément (8) de support dans des logements précisément adaptés du boîtier (1) de frein, par enfoncement dans le boîtier (1) de frein et est bloqué dans le boîtier (1) de frein, au moyen de becs (23, 23') d'encliquetage, dans des rainures (24, 24') d'encliquetage du boîtier (1) de frein.
